# EUROPEAN PATENT SPECIFICATION

(11) **EP 3 371 450 B1**
(45) Date of publication and mention of the grant of the patent: **11.03.2020**
(21) Application number: 16794385.1
(22) Date of filing: 03.11.2016
(51) Int. Cl.: F03B 13/10

(54) **APPARATUS FOR GENERATING ELECTRICITY USING WATER MOVEMENT**
VORRICHTUNG ZUR ERZEUGUNG VON STROM AUS WASSERSTRÖMUNG
APPAREIL DE PRODUCTION D'ÉLECTRICITÉ À PARTIR D'UNE CIRCULATION D'EAU DE COURANT DE MARÉE OU OCÉANIQUE

(30) Priority: 04.11.2015 GB 201519534
(43) Date of publication of application: 12.09.2018
(73) Proprietor: Ocean Current Energy LLC, London SE1 9LP (GB)
(72) Inventor: BAXLEY, Willilam Edward, Hollywood, Florida 33021 (US); MULVEY, Patrick James, San Diego, California 92124 (US); HEAFITZ, Bruce, Aventura, Florida 33180 (US)
(74) Representative: Jones, Graham Henry
(86) International application number: PCT/GB2016/000195
(87) International publication number: WO 2017/077263

(56) References cited:
- WO-A1-2010/111318
- WO-A1-2015/140490
- WO-A2-2014/076477
- JP-A- 2015 102 086

## Description

This invention relates to apparatus for generating electricity and, more especially, this invention relates to apparatus for generating electricity using water movement.

Apparatus for generating electricity using water movement is known. Typically, the apparatus is installed in oceans at considerable depth. Maintenance of the apparatus soon becomes a problem. Sometimes maintenance work that may be required has to be done by divers, and then the divers are required to work in dangerous conditions. Often the apparatus is not able to be repaired using divers, in which case new apparatus is required. The cost of manufacture and installation of the apparatus is high. Also, the defective apparatus often has to be removed because it is environmentally unacceptable to leave it in position, and this adds to costs.

JP 2015 10286 A, WO 2014/076477 A2 and WO 2010/111318 A1 disclose apparatus for generating electricity using water movement. The apparatus disclosed in JP 2015 102086 A may be regarded as comprising an electrical generator for generating the electricity, transport means for transporting a defective part of the electrical generator or a replacement part of the electrical generator around the apparatus, and control means which is for use in the maintenance of the apparatus and which operates on the submerged electrical generator to remove the defective part and install the replacement part without the need for divers. The apparatus disclosed in JP 2015 102086 A is such that the control means has difficulty in correctly aligning the replacement part during installation of the replacement part. Water movement at varying depths may vary considerably in speed and direction of flow, and this varying water movement may create conditions whereby the apparatus is unable to operate satisfactorily or operate at all.

It is an aim of the present invention to obviate or reduce the above mentioned problems.

Accordingly, the present invention provides apparatus for generating electricity using water movement, which apparatus comprises:
(i) at least one electrical generator which is for generating the electricity and which comprises a housing, a rotor and a stator;
(ii) raising and lowering means for raising a defective part of a submerged electrical generator to the water surface, and for lowering a replacement part for the submerged electrical generator from the water surface;
(iii) transport means for transporting the defective part of the electrical generator or the replacement part of the electrical generator around the apparatus; and
(iv) control means which is for use in the maintenance of the apparatus and which operates on the submerged electrical generator to remove the defective part of the electrical generator and install the replacement part of the electrical generator in place of the defective part without the need for divers,
characterised in that:
(a) the control means further comprises rotator means for rotating the replacement part of the electrical generator when it is received in the apparatus, so that the replacement part is able to be lowered to the apparatus such that the thinnest cross sectional area of the replacement part is presented to the water movement and thereby generates a minimum drag through the water, and whereby the replacement part is able to be rotated to a correct orientation in the apparatus for the installation in the apparatus; and
(b) the rotator means is a turntable which is vertically mounted so that it is parallel to the face of the electrical generator as installed in the apparatus.

The water that passes through the electrical generator in order to cause the electrical generator to generate the electricity may be an ocean current or it may alternatively be an ocean tidal flow. If an ocean current is being used, the apparatus is able to be submerged at a desired height off the ocean floor, and thereby be located in the ocean current and thereby best receive the ocean current. If a tidal flow is being used, the apparatus is able to be mounted on the ocean floor. The water may alternatively be in a river, estuary or other place. Generally, the apparatus may be mounted wherever appropriate in whatever water is desired. There will be no need to worry about the safety of divers operating in considerable depths of water and/or in dangerous conditions.

Advantageously, the apparatus may be such that the defective part is able to be removed and the replacement part is able to be installed whilst the apparatus is online and still generating electricity. This avoids interruption of the electrical supply, and it also avoids expensive downtime during which the apparatus is not generating electricity because it is being repaired.

The raising and lowering means may include a cable for holding the defective part and the replacement part.

The raising and lowering means may include a camera for use in ascertaining the position of the defective part and the replacement part relative to the remainder of the apparatus.

The raising and lowering means may include latching means for latching to and releasing from the defective part and the replacement part. The latching means may be a remotely controlled claw. Other types of latching means may be employed.

The raising and lowering means may include a formation for enabling the defective part to be removed from the control means, and the replacement part to be connected to the control means. Any suitable formation may be employed.

The defective part of the electrical generator may be, for example, a rotor and magnets. Other types of defective part may be removed. The entire electrical generator may have, for example, a rotor, magnets, a stator and a housing. Other constructions for the entire electrical generator may be employed.

The housing of the electrical generator is preferably a hexagon. Other shapes for the housing may be employed.

The control means may comprise a housing. The housing of the control means may typically be of the same shape as the housing of the electrical generator. The housing of the control means may however of a different shape to the housing of the electrical generator if desired. Shapes other than hexagonal end shapes may be employed.

The apparatus may be one in which there is only one of the control means in the apparatus. Only one of the control means may be used when there is only one of the electrical generators, or where there is an array of the electrical generators but the array of generators is of a size which is able to be serviced by just one of the control means.

Alternatively, the apparatus may be one in which there is an array of the electrical generators, and in which there is more than one of the control means. More than one of the control means may be employed for large arrays of the electrical generators where it is easier to employ two or more of the control means rather than a single control means.

Any suitable and appropriate formations may be employed for enabling the defective part to the removed by the control means, and the replacement part to be installed by the control means. Thus, the defective part and the replacement part may be plug-in parts. The plug-in parts may be simple male and female joints. Alternatively, the male and female parts may include a twist lock formation. Alternatively, the male and female parts may be screw parts. The particular formations employed for the removal and replacement of the defective part and replacement part will usually also be employed for the formation on the raising and lowering means which enables the defective part to be removed from the control means, and the replacement part to be connected to the control means. Different formations may however be employed.

Embodiments of the invention will now be described solely by way of example and with reference to the accompanying drawings in which:
Figure 1 is an end view of first apparatus of the present invention and illustrates the removal of a defective part and the installation of a replacement part;
Figure 2 is a perspective view from the front and above of the apparatus shown in Figure 1;
Figure 3 is a perspective view from the front and above of second apparatus of the present invention;
Figure 4 is a perspective view from the front and one side of a defective part or a replacement part;
Figure 5 is an end view of third apparatus of the present invention, with the apparatus being mounted on an installation cradle; and
Figure 6 shows the installation cradle of Figure 5 and without the electrical generators and the control means.

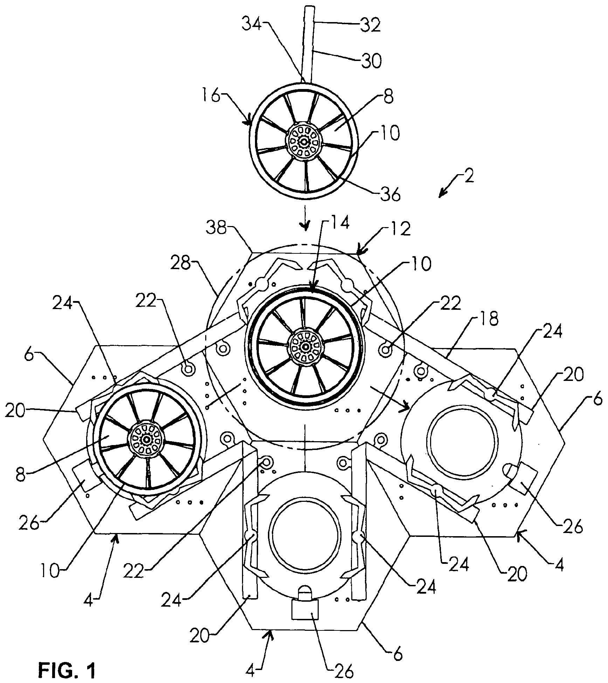

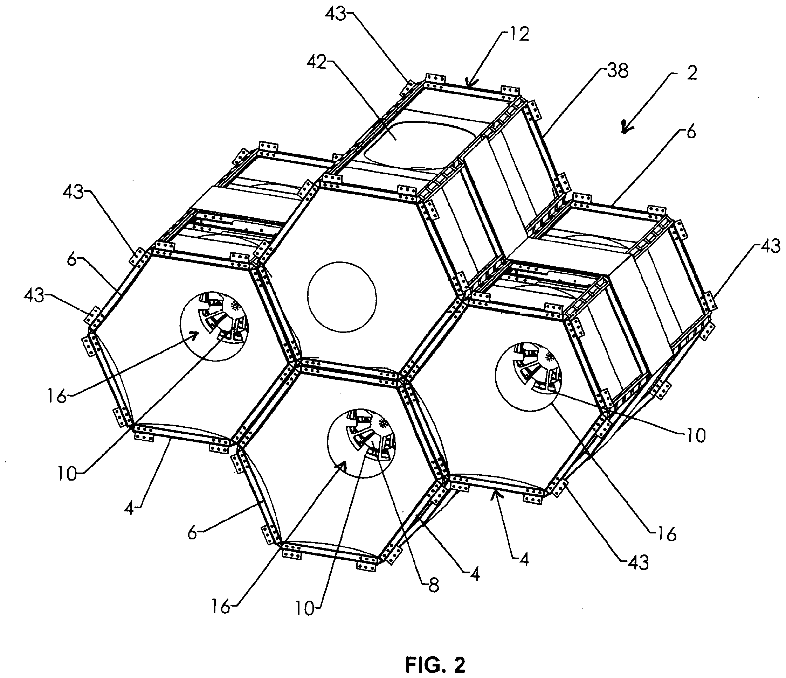

Referring to Figures 1 and 2, there is shown apparatus 2 for generating electricity using ocean water movement. The apparatus 2 comprises three electrical generators 4. Each electrical generator 4 is for generating the electricity. Each electrical generator 4 comprises a housing 6, a rotor 8, and a stator 10.

The apparatus 2 further comprises control means 12. The control means 12 is for use in the maintenance of the apparatus 2.

The control means 12 is configured to enable the removal of at least one defective part 14 in each electrical generator 4. For ease of understanding, the defective part 14 is shown being positioned in the control means 12 . The control means 12 is configured to enable the reception of a replacement part 16. For ease of understanding the replacement part 16 is shown being lowered into position into the control means 12.

The apparatus 2 includes transport means 18 for transporting the defective part 14 around the apparatus 2 such that the defective part 14 is able to be removed from the apparatus 2. The transport means 18 is also for transporting the replacement part 16 around the apparatus 2 such that the replacement part 16 is able to be installed in place of the defective part 14. As can be appreciated from Figure 1, the transport means 18 is located partly in the control means 12 and partly in each one of the electrical generators 4.

The transport means 18 is shown as including a guide track 20, rollers 22, and locking devices 24 for locking and unlocking the defective part 14 and the replacement part 16.

The apparatus 2 is such that the defective part 14 and the replacement part 16 are parts whereby the defective part 14 is able to be removed by the control means 12, the replacement part 16 is able to be installed by the control means 12, and the removal and replacement are able to be effected without the need for divers even although the apparatus 2 in use is submerged at depth in the ocean water. More specifically, as shown in Figure 1, the defective part 14 and the replacement part 16 are plug-in parts which plug into plug-in connections 26. The plug-in connections 26 enable the apparatus 2 to be maintained from the surface of the ocean. The apparatus 2 is constructed such that properly functioning electrical generators 4 are able to continue functioning. Thus the apparatus 2 is able to continue to provide electricity even during maintenance and/or repair. There is no need for the apparatus 2 to be stopped and taken off line during maintenance and/or repair, with consequent expensive downtime.

The control means 12 includes rotator means 28. The rotator means 28 is a vertical rotator means 28. The rotator means 28 is for rotating the replacement part 16 when it is received in the apparatus 2. The replacement part 16 is able to be lowered to the apparatus 2 such that the thinnest cross sectional area of the replacement part 16 is presented to the ocean water movement and thereby generates a minimum drag through the water. The replacement part 16 is able to be rotated by the rotator means 28 to a correct orientation in the apparatus 2 for the plug-in connection. The rotator means 28 is a turntable which is vertically mounted so that is parallel to the electrical generators 4 as installed in the apparatus 2.

The apparatus 2 includes raising and lowering means 30 for raising the defective part 14 from the apparatus 2 to the ocean surface, and for lowering the replacement part 16 to the apparatus 2 from the ocean surface. The raising and lowing means 30 includes a cable 32 for holding the defective part 14 and the replacement part 16. The raising and lowering means 30 also includes a camera 34 for use in ascertaining the position of the defective part 14 and the replacement part 16 relative to the remainder of the apparatus 2.

The raising and lowering means 30 may also include latching means (not shown) for latching to and releasing the defective part 14 and the replacement part 16. The latching means may be a remote controlled claw.

The raising and lowering means 30 may also include a formation (not shown) for enabling the defective part 14 to be removed from the control means 12, and the replacement part 14 to be connected to the control means. The formation may be, for example, a plug-in formation.

As shown in Figure 1, the control means 12 is removing only the defective part 14 of the electrical generator. This defective part 14 is shown as a rotor 36 having magnets (not shown). In an alternative embodiment of the invention, the control means 12 may be configured to remove a combination of the rotor, magnets and stator, or a combination of the rotor, magnets, stator and the housing 6.

As shown in Figures 1 and 2, the housing 6 of each electrical generator 4 is a hexagon in end view. The control means 12 comprises a housing 38. The housing 38 is of the same shape as the housings 6. There is one of the control means 12 for servicing three of the electrical generators 4.

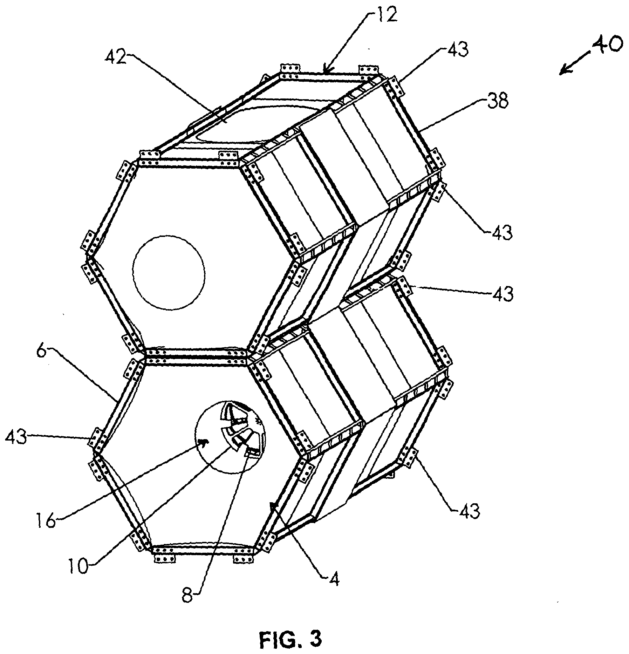

Referring now to Figure 3, there is shown apparatus 40 which is like the apparatus 2 except that there is only one of the electrical generators 4. Similar parts as in Figures 1 and 2 have been given the same reference numerals for ease of comparison and understanding.

Figure 3 shows how the housing 38 of the control means 12 is provided with an opening 42 through which the defective part 14 and the replacement part 16 are passed. Figure 3 also shows how the housing 6 in Figures 1 and 3, the housing 6 in Figure 3, and the housing 38 in Figures 1, 2 and 3 are provided with lugs 43 for enabling the housing 6, 38 to be connected together, for example by nuts and bolts.

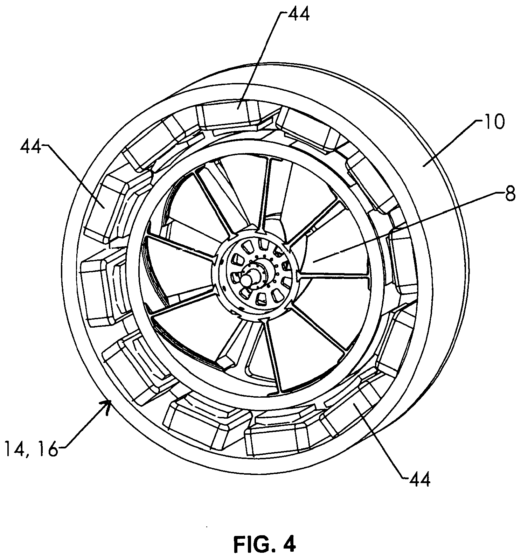

Figure 4 shows an example of a defective part 14 or a replacement part 16. The part 14, 16 is shown as comprising the rotor 8, the stator 10, and magnets 44.

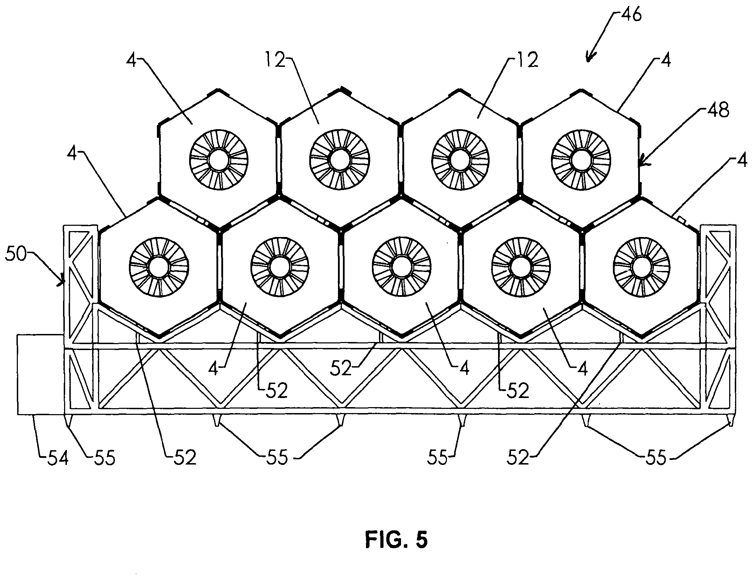

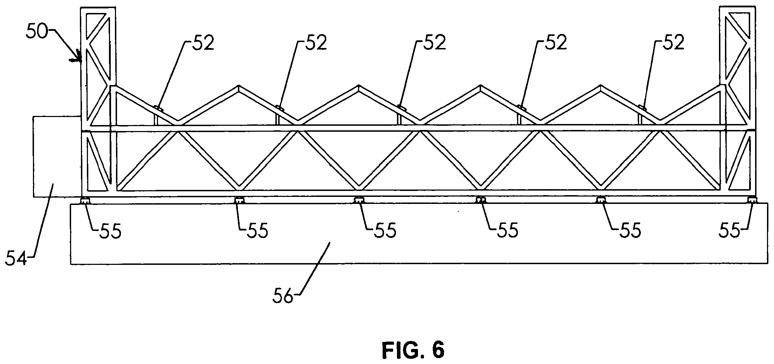

Figures 5 and 6 show apparatus 46 of the present invention. The apparatus 46 comprises seven of the electrical generators 4, and two of the control means 12. The left hand control means 12 services the four electrical generators 4 to the left of Figure 5, whilst the right hand control means 12 services the three electrical generators to the right of Figure 5. The electrical generators 4 and the control means 12 form an array 48 which is mounted on a support cradle 50. The support cradle 50 is of tubular construction as best shown in Figure 6. The support cradle 50 has plug-in electrical connector means 52 for enabling the lowermost electrical generators 4 to be connected to a bus bar or other main cable for providing the electricity to electricity-collecting apparatus 54. The electricity collecting apparatus 54 is able to adjust the electricity as it arrives and then send it to the surface, via a cable (not shown). The support cradle 50 is also shown with feet 55 for enabling the support cradle 50 to be mounted on a support surface such for example as the ocean bed (not shown) or on a support base 56 as shown in Figure 6.

The apparatus 2, 40, 46 is easily able to be operated. There is no need for divers to dive to considerable depths in oceans in order to try and effect repairs to the apparatus. The apparatus 2, 40, 46 is able to be maintained, serviced and repaired from the ocean surface.

It is to be appreciated that the embodiments of the invention described above with reference to the accompanying drawings have been given by way of example only and that modifications may be effected. Thus, the apparatus may be used in water other than ocean water, for example river water. Connections other than the plug-in connections 26 may be employed. The connections may be for more than one service, for example for electricity and also hydraulics. The control means 12 may be of other designs, and the control means 12 may include different parts to those shown. Individual components shown in the drawings are not limited to use in their drawings and they may be used in other drawings and in all aspects of the invention.

## Claims

1. Apparatus (2) for generating electricity using water movement, which apparatus (2) comprises:
(i) at least one electrical generator (4) which is for generating the electricity and which comprises a housing (6), a rotor (8) and a stator (10);
(ii) raising and lowering means (30) for raising a defective part of a submerged electrical generator (4) to the water surface, and for lowering a replacement part for the submerged electrical generator (4) from the water surface;
(iii) transport means (18) for transporting the defective part of the electrical generator (4) or the replacement part of the electrical generator (4) around the apparatus (2); and
(iv) control means (12) which is for use in the maintenance of the apparatus (2) and which operates on the submerged electrical generator (4) to remove the defective part of the electrical generator (4) and install the replacement part of the electrical generator (4) in place of the defective part without the need for divers,
**characterised in that**:
(a) the control means (12) further comprises rotator means (28) for rotating the replacement part of the electrical generator (4) when it is received in the apparatus (2), so that the replacement part is able to be lowered to the apparatus (2) such that the thinnest cross sectional area of the replacement part is presented to the water movement and thereby generates a minimum drag through the water, and whereby the replacement part is able to be rotated to a correct orientation in the apparatus (2) for the installation in the apparatus (2); and
(b) the rotator means (28) is a turntable which is vertically mounted so that it is parallel to the face of the electrical generator (4) as installed in the apparatus (2).

2. Apparatus (2) according to claim 1 in which the raising and lowering means (30) includes a camera (34) for use in ascertaining the position of the defective part and the replacement part relative to the remainder of the apparatus (2).

3. Apparatus (2) according to claim 1 or claim 2 in which the raising and lowering means (30) includes latching means for latching to and releasing from the defective part and the replacement part.

4. Apparatus (2) according to claim 3 in which the latching means is a remotely controlled claw.

5. Apparatus (2) according to any one of the preceding claims in which the raising and lowering means (30) includes a formation for enabling the defective part to be removed from the control means (12), and the replacement part to be connected to the control means (12).

6. Apparatus (2) according to any one of the preceding claims in which the housing (6) of the electrical generator (4) is a hexagon.

7. Apparatus (2) according to any one of the preceding claims in which the control means (12) comprises a housing, and in which the housing of the control means (12) is of the same shape as the housing (6) of the electrical generator (4).

8. Apparatus (2) according to any one of the preceding claims in which there is only one of the control means (12) in the apparatus (2).

9. Apparatus (2) according to any one of claims 1 - 7 in which there is an array of the electrical generators (4), and in which there is more than one of the control means (12).

10. Apparatus (2) according to any one of the preceding claims in which the defective part and the replacement part are plug-in parts.

## Patentansprüche

1. Vorrichtung (2) zum Erzeugen von Elektrizität mithilfe von Wasserbewegung, wobei die Vorrichtung (2) umfasst:
(i) mindestens einen Stromgenerator (4), der geeignet ist zum Erzeugen der Elektrizität und der ein Gehäuse (6), einen Rotor (8) und einen Stator (10) umfasst;
(ii) ein Hebe- und Absenkelement (30) zum Anheben eines schadhaften Bauteils eines eingetauchten Stromgenerators (4) an die Wasseroberfläche und zum Absenken eines Ersatzbauteils für den eingetauchten Stromgenerator (4) von der Wasseroberfläche;
(iii) ein Transportelement (18) zum Transportieren des schadhaften Bauteils des Stromgenerators (4) oder des Ersatzbauteils des Stromgenerators (4) um die Vorrichtung (2) herum; und
(iv) ein Steuerelement (12), das geeignet ist zum Verwenden bei der Wartung der Vorrichtung (2) und das an dem eingetauchten Stromgenerator (4) betrieben wird, um das schadhafte Bauteil des Stromgenerators (4) zu entfernen und um das Ersatzbauteil des Stromgenerators (4) anstelle des schadhaften Bauteils zu installieren, ohne Taucher zu benötigen,
**dadurch gekennzeichnet, dass**:
(a) das Steuerelement (12) außerdem umfasst: ein Drehelement (28) zum Drehen des Ersatzbauteils des Stromgenerators (4), wenn es in der Vorrichtung (2) empfangen wird, sodass das Ersatzbauteil in der Lage ist, um zu der Vorrichtung (2) so abgesenkt zu werden, dass die geringste Querschnittsfläche des Ersatzbauteils der Wasserbewegung ausgesetzt wird und dadurch ein Minimalwiderstand durch das Wasser erzeugt wird, und wodurch das Ersatzbauteil in der Lage ist, in eine korrekte Ausrichtung in der Vorrichtung (2) für die Installation in der Vorrichtung (2) gedreht zu werden; und
(b) das Drehelement (28) eine Drehscheibe ist, die vertikal montiert ist, sodass sie parallel zur Vorderseite des Stromgenerators (4) ist, wie er in der Vorrichtung (2) installiert ist.

2. Vorrichtung (2) nach Anspruch 1, wobei das Hebe- und Absenkelement (30) eine Kamera (34) aufweist, die beim Ermitteln der Position des schadhaften Bauteils und des Ersatzbauteils in Bezug auf den Rest der Vorrichtung (2) verwendet wird.

3. Vorrichtung (2) nach Anspruch 1 oder Anspruch 2, wobei das Hebe- und Absenkelement (30) ein Verriegelungselement aufweist, um das schadhafte Bauteil und das Ersatzbauteil zu verriegeln und freizugeben.

4. Vorrichtung (2) nach Anspruch 3, wobei das Verriegelungselement eine ferngesteuerte Klaue ist.

5. Vorrichtung (2) nach einem der vorhergehenden Ansprüche, wobei das Hebe- und Absenkelement (30) eine Anordnung aufweist, die ermöglicht, dass das schadhafte Bauteil von dem Steuerelement (12) entfernt wird und dass das Ersatzbauteil mit dem Steuerelement (12) verbunden wird.

6. Vorrichtung (2) nach einem der vorhergehenden Ansprüche, wobei das Gehäuse (6) des Stromgenerators (4) ein Sechseck ist.

7. Vorrichtung (2) nach einem der vorhergehenden Ansprüche, wobei das Steuerelement (12) ein Gehäuse umfasst und wobei das Gehäuse des Steuerelements (12) die gleiche Form aufweist wie das Gehäuse (6) des Stromgenerators (4).

8. Vorrichtung (2) nach einem der vorhergehenden Ansprüche, wobei sich nur ein Steuerelement (12) in der Vorrichtung (2) befindet.

9. Vorrichtung (2) nach einem der Ansprüche 1 bis 7, wobei eine Anordnung von Stromgeneratoren (4) vorhanden ist und wobei mehr als ein Steuerelement (12) vorhanden ist.

10. Vorrichtung (2) nach einem der vorhergehenden Ansprüche, wobei das schadhafte Bauteil und das Ersatzbauteil steckbare Bauteile sind.

## Revendications

1. Appareil (2) pour générer de l'électricité en utilisant une circulation d'eau, lequel appareil (2) comprend :
(i) au moins un générateur électrique (4) qui sert à générer l'électricité et qui comprend un bâti (6), un rotor (8) et un stator (10) ;
(ii) un moyen de soulèvement et d'abaissement (30) pour soulever une pièce défectueuse d'un générateur électrique submergé (4) jusqu'à la surface de l'eau, et pour abaisser une pièce de rechange pour le générateur électrique submergé (4) depuis la surface de l'eau ;
(iii) un moyen de transport (18) pour transporter la pièce défectueuse du générateur électrique (4) ou la pièce de rechange du générateur électrique (4) autour de l'appareil (2) ; et
(iv) un moyen de commande (12) qui est destiné à être utilisé lors de l'entretien de l'appareil (2) et qui agit sur le générateur électrique submergé (4) pour enlever la pièce défectueuse du générateur électrique (4) et pour installer la pièce de rechange du générateur électrique (4) à la place de la pièce défectueuse sans avoir besoin de plongeurs,
**caractérisé en ce que** :
(a) le moyen de commande (12) comprend en outre un moyen de rotation (28) pour tourner la pièce de rechange du générateur électrique (4) lorsqu'elle est reçue dans l'appareil (2), de manière à ce que la pièce de rechange puisse être abaissée jusqu'à l'appareil (2) de telle sorte que la section transversale la plus mince de la pièce de rechange soit présentée à la circulation de l'eau et produise ainsi une traînée minimum à travers l'eau, ce qui fait que la pièce de rechange peut être tournée jusqu'à une orientation correcte dans l'appareil (2) pour son installation dans l'appareil (2) ; et
(b) le moyen de rotation (28) est une plaque tournante qui est montée verticalement de manière à être parallèle à la face du générateur électrique (4) tel qu'il est installé dans l'appareil (2).

2. Appareil (2) selon la revendication 1, dans lequel le moyen de soulèvement et d'abaissement (30) comprend une caméra (34) destinée à être utilisée pour déterminer la position de la pièce défectueuse et de la pièce de rechange par rapport au reste de l'appareil (2) .

3. Appareil (2) selon la revendication 1 ou la revendication 2, dans lequel le moyen de soulèvement et d'abaissement (30) comprend un moyen d'enclenchement pour s'enclencher avec la pièce défectueuse et la pièce de rechange et pour s'en dégager.

4. Appareil (2) selon la revendication 3, dans lequel le moyen d'enclenchement est une pince commandée à distance.

5. Appareil (2) selon l'une quelconque des revendications précédentes, dans lequel le moyen de soulèvement et d'abaissement (30) comprend une formation pour permettre à la pièce défectueuse d'être enlevée du moyen de commande (12), et à la pièce de rechange d'être rattachée au moyen de commande (12).

6. Appareil (2) selon l'une quelconque des revendications précédentes, dans lequel le bâti (6) du générateur électrique (4) est un hexagone.

7. Appareil (2) selon l'une quelconque des revendications précédentes dans lequel le moyen de commande (12) comprend un bâti, et dans lequel le bâti du moyen de commande (12) a la même forme que le bâti (6) du générateur électrique (4).

8. Appareil (2) selon l'une quelconque des revendications précédentes dans lequel il y a seulement un moyen de commande (12) dans l'appareil (2).

9. Appareil (2) selon l'une quelconque des revendications 1 à 7 dans lequel il y a un groupe de générateurs électriques (4), et dans lequel il y a plus qu'un moyen de commande (12).

10. Appareil (2) selon l'une quelconque des revendications précédentes dans lequel la pièce défectueuse et la pièce de rechange sont des pièces enfichables.
